# EUROPEAN PATENT APPLICATION

(11) **EP 4 006 797 A1**
(43) Date of publication of application: **01.06.2022**
(21) Application number: 21162840.9
(22) Date of filing: 16.03.2021
(51) Int. Cl.: G06Q 10/08, G05D 1/00

(54) **LOGISTICS MANAGEMENT SYSTEM USING DRONE EQUIPPED WITH RFID READER AND RFID TAG SYSTEM THEREOF**

(30) Priority: 27.11.2020 KR 20200162415
(71) Applicant: Apulse Technology Co., Ltd., Gyeonggi-do 14322 (KR)
(72) Inventor: KIM, Nam Joong, 15622 Gyeonggi-do (KR)
(74) Representative: Isarpatent

(57) **Abstract**

A logistics management system, and a radio frequency identification (RFID) tag system thereof, are capable of performing logistics management on products regardless of a warehouse size by using a drone equipped with an RFID reader. The logistics management system includes a plurality of product RFID tags attached to products, respectively, loaded in a loading frame provided in a warehouse. In addition, the logistics management system includes a plurality of flight guide RFID tags installed at a plurality of points of the loading frame, respectively, and providing flight path information to the drone. Further, the logistics management system includes the drone having the RFID reader, flying along a flight path based on the flight path information of the flight guide RFID tags read by the RFID reader, and reading the product RFID tags attached to the products.

## Description

### TECHNICAL FIELD

The present disclosure generally relates to a logistics management system based on RFID technology. Particularly, the present disclosure relates to a logistics management system, and an RFID tag system thereof, in which a drone equipped with an RFID reader reads RFID tags attached to products loaded in a certain space and a logistics management is performed based on the reading.

### BACKGROUND

A radio frequency identification (RFID) tag, which is a kind of an electronic tag, is capable of transmitting recorded information wirelessly through radio waves. An RFID reader is capable of receiving such information from the RFID tag. The RFID reader can interpret the received information and acquire unique information of an object to which the RFID tag is attached.

Thus, having the ability of reading information recorded in the RFID tag in a noncontact manner, the RFID reader can be used for recognizing, tracking, and managing a great variety of objects such as products, animals, and people to which the RFID tags are attached.

For example, in the logistics industry, RFID technology is used for logistics management on products (or goods, commodities, merchandise, etc.) loaded in a warehouse. Specifically, RFID tags are attached to the respective products loaded in the warehouse, and a manager performs logistics management by reading the RFID tags through an RFID reader.

However, if the warehouse has a size that exceeds the range of RFID communication, there is a problem that the manager with the RFID reader cannot perform reading on some products outside the communication range in one place. In addition, depending on the position of the RFID tag attached to the product and the reading direction of the RFID reader, there may arise a problem in that the reading cannot be performed smoothly even though the products are placed within the communication range.

As a solution to these problems, there are a method of loading the products only within the RFID communication range, and a method in which the manager directly moves to the products outside the communication range to perform reading.

In the former case, because there is an unused space among the loadable spaces in the warehouse, space utilization is poor. In the latter case, because the manager has to access and read distant products on foot or by means of a transportation, it is inconvenient and takes a lot of time to manage logistics, and also there is a risk of a safety accident while using the transportation means.

In addition, if the manager with the RFID reader performs logistics management while moving the large space of the warehouse, the manager may omit reading for some products loaded in the warehouse due to errors or mistakes.

### SUMMARY

Accordingly, the present disclosure provides a logistics management system, and an RFID tag system thereof, capable of performing logistics management on products regardless of a warehouse size by using a drone equipped with an RFID reader.

In addition, the present disclosure provides a logistics management system, and an RFID tag system thereof, capable of preventing a logistics management error due to a manager's mistake.

In addition, the present disclosure provides a logistics management system, and an RFID tag system thereof, using a drone equipped with an RFID reader in place of a manager.

According to the present disclosure, a logistics management system using a drone equipped with a radio frequency identification (RFID) reader includes a plurality of product RFID tags attached to products, respectively, loaded in a loading frame provided in a warehouse; a plurality of flight guide RFID tags installed at a plurality of points of the loading frame, respectively, and providing flight path information to the drone; and the drone having the RFID reader, flying along a flight path based on the flight path information of the flight guide RFID tags read by the RFID reader, and reading the product RFID tags attached to the products.

In the logistics management system, the flight guide RFID tags may be installed at the plurality of points of the loading frame along the flight path of the drone, and each one of the flight guide RFID tags may provide information about a flight path toward an adjacent flight guide RFID tag.

In the logistics management system, the flight guide RFID tags may include a plurality of turning point RFID tags installed at turning points of the flight path of the drone and providing change information about a current flight direction of the drone.

In the logistics management system, the turning point RFID tags may provide information on vertical, horizontal, or rotating flight of the drone.

In the logistics management system, the flight guide RFID tags may further include at least one intermediate RFID tag installed between the turning point RFID tags and providing maintenance information about the current flight direction of the drone.

In the logistics management system, the flight guide RFID tags may be installed on the loading frame in a square wave shape so that the drone reads the product RFID tags of the products loaded in the loading frame while flying in a square wave shape.

In the logistics management system, the drone may perform a flight according to the flight path information of the flight guide RFID tags based on signals of specific strength or more read from the flight guide RFID tags.

The logistics management system may further include a drone controller transmitting a flight command and a control signal to the drone for logistics management.

According to the present disclosure, a radio frequency identification (RFID) tag system for a logistics management system using a drone equipped with an RFID reader may include a plurality of product RFID tags attached to products, respectively, loaded in a loading frame provided in a warehouse; and a plurality of flight guide RFID tags installed at a plurality of points of the loading frame, respectively, and providing flight path information to the drone.

In the RFID tag system, the flight guide RFID tags may be installed at turning points of the flight path of the drone and provide change information about a current flight direction of the drone.

### BRIEF DESCRIPTION OF THE DRAWINGS

FIG. 1 is a block diagram illustrating a logistics management system using a drone equipped with an RFID reader according to an embodiment of the present disclosure.
FIGS. 2 and 3 are exemplary diagrams illustrating an operation of performing logistics management with the drone in the logistics management system shown in FIG. 1.

### DETAILED DESCRIPTION

Hereinafter, embodiments of the present disclosure will be described in detail with reference to the accompanying drawings. The present disclosure may, however, be embodied in many different forms and should not be construed as being limited to the embodiments set forth herein. Rather, these embodiments are provided so that the disclosure will be thorough and complete and will fully convey the scope of the disclosure to those skilled in the art.

In the following description of embodiments, techniques that are well known in the art and not directly related to the present disclosure are not described. This is to clearly convey the subject matter of the present disclosure by omitting an unnecessary explanation. For the same reason, some elements in the drawings are exaggerated, omitted, or schematically illustrated. Also, the size of each element does not entirely reflect the actual size. In the disclosure, the same or corresponding elements are denoted by the same reference numerals.

In the description, singular forms are intended to include plural forms as well, unless the context clearly indicates otherwise.

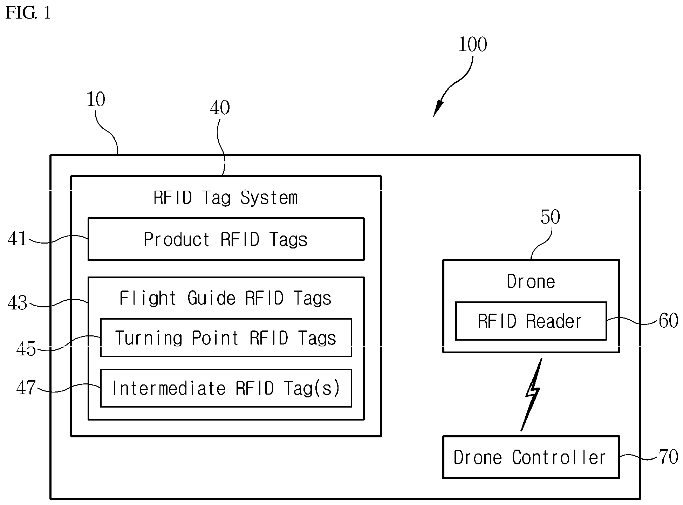

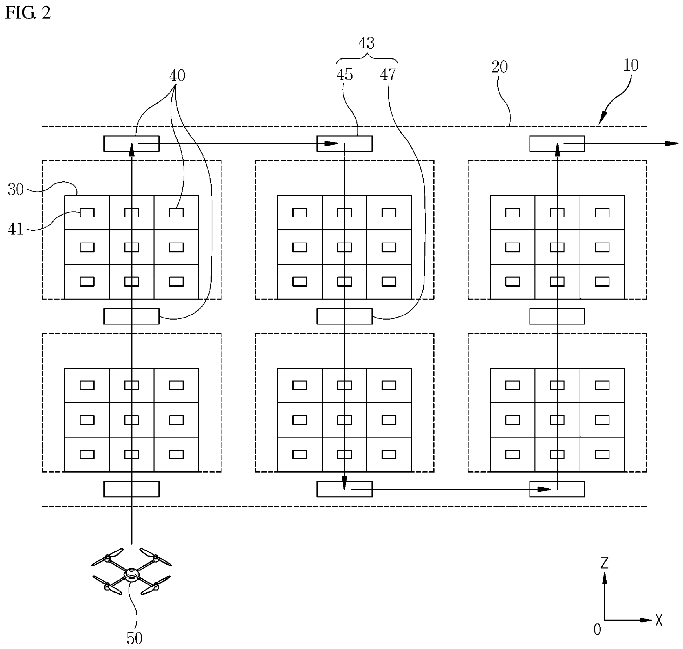

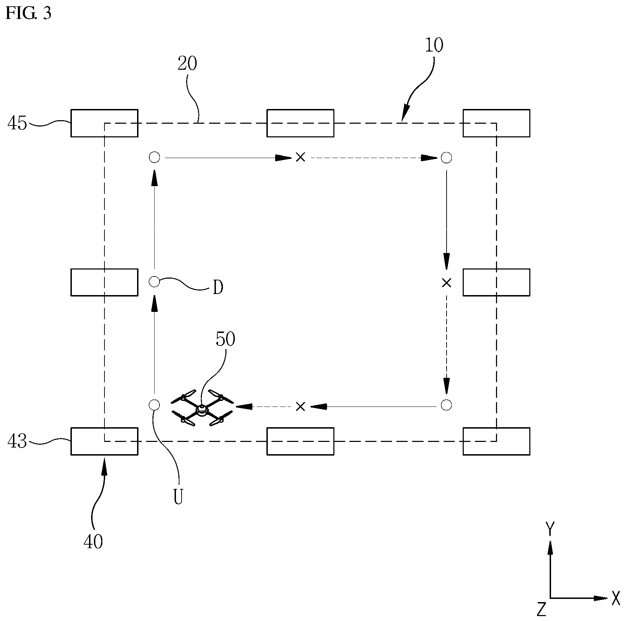

FIG. 1 is a block diagram illustrating a logistics management system using a drone equipped with an RFID reader according to an embodiment of the present disclosure. In addition, FIGS. 2 and 3 are exemplary diagrams illustrating an operation of performing logistics management with the drone in the logistics management system shown in FIG. 1.

Referring to FIGS. 1 to 3, the logistics management system 100 includes an RFID tag system 40 and a drone 50. The RFID tag system 40 is installed in a warehouse 10 in which products 30 are loaded. The drone 50 performs logistics management on the loaded products 30 while flying inside the warehouse 10 based on tag information read from the RFID tag system 40.

The RFID tag system 40 includes product RFID tags 41 attached to the respective products 30, and flight guide RFID tags 43 installed on a loading frame 20. Specifically, the product RFID tags 41 are attached to the products 30, respectively, loaded in the loading frame 20 provided in the warehouse 10. The flight guide RFID tags 43 are respectively installed at a plurality of points of the loading frame 20, and provides flight path information to the drone 50.

The drone 50 has an RFID reader 60, which not only reads the product RFID tags 41 attached to the products 30 loaded in the loading frame 20, but also reads the flight guide RFID tags 43 installed on the loading frame 20. That is, the drone 50 can fly along a certain flight path based on the flight path information of the flight guide RFID tags 43 read by the RFID reader 60.

In addition, the logistics management system 100 may further include a drone controller 70 for controlling the flight of the drone 50.

In the outdoors, the drone 50 not only allows manual flight control through the drone controller 70, but also enables autonomous flight to some extent based on global positioning system (GPS) information. On the other hand, in an indoor space, only manual flight control using the drone controller 70 is possible because the GPS information cannot be used for the flight of the drone 50.

However, if a manager controls the flight of the drone 50 only in a manual manner using the drone controller 70, the logistics management time may undesirably vary depending on the manager's skill level of manipulating the drone controller 70.

In this embodiment, the flight of the drone 50 is controlled using the RFID tag system 40, and the logistics management of the products 30 loaded in the warehouse 10 is performed through the flight control of the drone 50. Accordingly, it is possible to perform the logistics management regardless of the manager's skill level of manipulating the drone controller 70.

As such, the logistics management system 100 according to the present disclosure performs the reading of the product RFID tags 41 by using the drone 50 having the RFID reader 60 in the warehouse 10 where the products 30 with the product RFID tags 41 attached are loaded, it is possible to perform the logistics management on the loaded products 30 regardless of the size of the warehouse 10. In particular, the logistics management using the drone 50 can be usefully used in the indoor warehouse.

In addition, the logistics management using the drone 50 equipped with the RFID reader 60 can prevent a logistics management error due to a manager's mistake.

Further, the drone 50 equipped with the RFID reader 60 can take over the role of a manager.

Now, the logistics management system 100 according to an embodiment of the present disclosure will be described in more detail.

The warehouse 10 contains the loading frame 20 where the products 30 are loaded. Typically, the loading frame 20 is installed in the form of a grid to provide a plurality of divided grid-type spaces for accommodating the products 30. The product RFID tags 41 are attached to the products 30, respectively. Each product RFID tag 41 stores recorded unique information on the product 30. The warehouse 10 may be an indoor warehouse.

The flight guide RFID tags 43 are installed at a plurality of points of the loading frame 20 in consideration of a desired flight path of the drone 50. That is, in order for the drone 50 to read the product RFID tags 41 of the products 30 loaded in the loading frame 20 while flying, the flight guide RFID tags 43 are disposed at predetermined positions on the loading frame 20 that correspond to a flight path of the drone 50. For example, each one of the flight guide RFID tags 43 provides information about a flight path toward any adjacent flight guide RFID tag 43.

The flight path information may include flight direction information and may further include flight speed information. When the flight speed of the drone 50 is set in advance, the flight path information may not include the flight speed information. The flight path information may also include identification information of the flight guide RFID tag 43 to be read next.

The flight guide RFID tags 43 may include a plurality of turning point RFID tags 45 and at least one intermediate RFID tag 47.

The turning point RFID tag 45 is installed at the turning point of the flight path of the drone 50 and provides change information about the current flight direction of the drone 50. For example, the turning point RFID tags 45 may provide information on vertical, horizontal, or rotating flight of the drone 50 that can change the current flight direction.

The intermediate RFID tag 47 is installed between the turning point RFID tags 45 and provides maintenance information about the current flight direction of the drone 50. For example, when adjacent turning point RFID tags 45 have a distance greater than a specific distance, unexpected errors may occur in flight guidance of the drone 50 performed based on tag information. Therefore, by placing the intermediate RFID tag 47 between the adjacent turning point RFID tag 45, it is possible to induce a stable flight of the drone 50.

If the drone 50 is capable of a stable flight regardless of a distance between the adjacent turning point RFID tags 45, the intermediate RFID tag 47 may not be used.

The drone 50 is equipped with the RFID reader 60. While flying along the flight path read from the flight guide RFID tags 43, the drone 50 reads the product RFID tags 41 of the products 30 loaded in the loading frame 20. For example, the RFID reader 60 is installed at a position of the drone 50 to directly face the loading frame 20. Additionally or alternatively, the drone 50 may have a position adjusting member so that the RFID reader 60 always faces the loading frame 20.

The drone 50 performs a flight according to the flight path information of the flight guide RFID tags 43 based on signals of specific strength or more read from the flight guide RFID tags 43. That is, the RFID reader 60 of the drone 50 can read the flight guide RFID tags 43 around the drone 50. If any signal read from the flight guide RFID tag 43 has strength less than the specific strength, the RFID reader 60 of the drone 50 ignores the read signal. This prevents the drone 50 from deviating from the flight path. The signal strength may be received signal strength indication (RSSI) of a signal received from the flight guide RFID tag 43.

Each flight guide RFID tag 43 read by the RFID reader 60 of the drone 50 may provide flight path information and also provide identification information of the next flight guide RFID tag 43 to be read. Therefore, even when a signal read from the flight guide RFID tag 43 has the specific strength or more, the RFID reader 60 of the drone 50 may further perform a process of checking whether the flight guide RFID tag 43 provides the identification information of the next flight guide RFID tag 43 to be read.

Meanwhile, the drone controller 70 transmits a flight command and a control signal to the drone 50 for logistics management. The drone controller 70 may be a dedicated controller or a smartphone of a manager. The drone controller 70 may start and end the flight of the drone 50.

In the above-described logistics management system 100, the logistics management using the drone 50 may be performed as shown in FIGS. 2 and 3. Hereinafter, it is assumed that the warehouse 10 is an indoor warehouse surrounded by four walls and the loading frame 20 is installed along each wall. FIG. 2 is an elevation view showing only one wall, and FIG. 3 is a plan view showing all four walls. In the following description, the wall may be an actual wall surface of the warehouse or a virtual vertical surface surrounding each area when the interior of the warehouse is divided into multiple areas.

Referring to FIG. 2, for the loading frame 20 installed along one wall of the warehouse 10, the flight guide RFID tags 43 may be installed on the loading frame 20 in a square wave shape. Therefore, the drone 50 can read the product RFID tags 41 of the products 30 loaded in the loading frame 20 while flying in a square wave shape.

That is, in FIG. 2 example, the drone 50 can perform logistics management while flying in a square wave shape that moves up and down in the Z-axis direction and proceeds in the X-axis direction.

Among the flight guide RFID tags 43, the turning point RFID tags 45 may be disposed at the top and bottom of the loading frame 20. That is, upper turning point RFID tags 45 may be disposed at the top of the loading frame 20 at regular intervals, and lower turning point RFID tags 45 may be disposed at the bottom of the loading frame 20 at regular intervals. In addition, among the flight guide RFID tags 43, the intermediate RFID tags 47 may be disposed between the upper and lower turning point RFID tags 45.

Before starting the logistics management, the drone 50 may be located at the zero point (O) of the XZ axes. For example, the manager can place the drone 50 at the zero point (O) of the XZ axes. Alternatively, the drone controller 70 may fly the drone 50 and place it at the zero point (O) of the XZ axes.

When a command to start the logistics management of the drone 50 is received from the drone controller 70, the RFID reader 60 of the drone 50 reads the flight path information from the turning point RFID tag 45 installed at a position of the loading frame 20 corresponding to the zero point (O) and then starts the flight of the drone 50. For example, the flight path information may include information for commanding the flight in the Z-axis direction.

After starting the flight, the drone 50 performs the flight based on the flight path information read from the flight guide RFID tags 43 without the control of the drone controller 70.

When completing the flight based on the flight path information read from the flight guide RFID tags 43, the drone 50 may transmit information on the completion of logistics management to the drone controller 70.

Upon receiving the completion information of logistics management, the drone controller 70 may turn off the operation of the drone 50.

Meanwhile, although it is exemplarily described in FIG. 2 that the drone 50 flies in a manner that moves up and down in the Z-axis direction and proceeds in the X-axis direction, but the present disclosure is not limited to this flight manner. For example, the drone 50 may fly in another manner that moves left and right in the X-axis direction and travels in a positive or negative Z-axis direction.

Referring to FIG. 3, the loading frame 20 may be installed along four walls of the warehouse 10. In this case, the flight of the drone 50 for each wall may be performed as shown in FIG. 2. In addition, the turning point RFID tag 45 installed at each intersection of adjoining walls provides information on rotational flight to rotate a flight direction on the current wall to another flight direction on the neighboring surface. For example, as shown, the drone 50 may fly in the positive Y-axis direction, the positive X-axis direction, the negative Y-axis direction, and the negative X-axis direction while moving up and down in the Z-axis direction. In FIG. 3, an upward movement (U) in the positive Z-axis direction is indicated as "O", and a downward movement (D) in the negative Z-axis direction is indicated as "X".

That is, the flight of the drone 50 for each of the four walls in FIG. 3 proceeds in the same manner as the flight of the drone 50 in FIG. 2. However, because the loading frame 20 of FIG. 3 includes four points where two adjacent walls intersect 90 degrees, the flight direction should be rotated 90 degrees at each intersection point, and thus the turning point RFID tags 45 provides information on rotational flight as the flight path information.

Although FIG. 2 shows the loading frame 20 provided on one surface and FIG. 3 shows the loading frame 20 provided on four surfaces, this is exemplary only and not construed as a limitation. In alternative embodiments, the loading frame 20 may be installed on two, three, five, or more surfaces. In addition, the loading frame may be formed along a curved surface. It is apparent from the present disclosure that the flight guide RFID tags 43 may provide flight path information so that the drone 50 can fly along the curved surface.

As described above, the logistics management system 100 according to the present disclosure provides information necessary for the flight of the drone 50 through the flight guide RFID tags 43, thereby performing the logistics management for the product 30 loaded in the warehouse 10 through the drone 50.

While the present disclosure has been particularly shown and described with reference to an exemplary embodiment thereof, it will be understood by those skilled in the art that various changes in form and details may be made therein without departing from the scope of the present disclosure as defined by the appended claims.

## Claims

1. A logistics management system using a drone equipped with a radio frequency identification (RFID) reader, the system comprising:
a plurality of product RFID tags attached to products, respectively, loaded in a loading frame provided in a warehouse;
a plurality of flight guide RFID tags installed at a plurality of points of the loading frame, respectively, and providing flight path information to the drone; and
the drone having the RFID reader, flying along a flight path based on the flight path information of the flight guide RFID tags read by the RFID reader, and reading the product RFID tags attached to the products.

2. The logistics management system of claim 1, wherein the flight guide RFID tags are installed at the plurality of points of the loading frame along the flight path of the drone, and each one of the flight guide RFID tags provides information about a flight path toward an adjacent flight guide RFID tag.

3. The logistics management system of claim 2, wherein the flight guide RFID tags include a plurality of turning point RFID tags installed at turning points of the flight path of the drone and providing change information about a current flight direction of the drone.

4. The logistics management system of claim 3, wherein the turning point RFID tags provide information on vertical, horizontal, or rotating flight of the drone.

5. The logistics management system of claim 3, wherein the flight guide RFID tags further include at least one intermediate RFID tag installed between the turning point RFID tags and providing maintenance information about the current flight direction of the drone.

6. The logistics management system of claim 5, wherein the flight guide RFID tags are installed on the loading frame in a square wave shape so that the drone reads the product RFID tags of the products loaded in the loading frame while flying in a square wave shape.

7. The logistics management system of claim 1, wherein the drone performs a flight according to the flight path information of the flight guide RFID tags based on signals of specific strength or more read from the flight guide RFID tags.

8. The logistics management system of claim 1, further comprising:
a drone controller transmitting a flight command and a control signal to the drone for logistics management.

9. A radio frequency identification (RFID) tag system for a logistics management system using a drone equipped with an RFID reader, the RFID tag system comprising:
a plurality of product RFID tags attached to products, respectively, loaded in a loading frame provided in a warehouse; and
a plurality of flight guide RFID tags installed at a plurality of points of the loading frame, respectively, and providing flight path information to the drone.

10. The RFID tag system of claim 9, wherein the flight guide RFID tags are installed at turning points of the flight path of the drone and provide change information about a current flight direction of the drone.
